# EUROPEAN PATENT APPLICATION

(11) **EP 1 705 814 A2**
(43) Date of publication of application: **27.09.2006**
(21) Application number: 06117147.6
(22) Date of filing: 30.11.2001
(51) Int. Cl.: H04H 9/00, H04N 7/16

(54) **Receiving device and transmission device**

(30) Priority: 01.12.2000 JP 2000366623
(62) Divisional of application: 01128643.2
(71) Applicant: Matsushita Electric Industries Co., Ltd., Kadoma-shi, Osaka 571-8501 (JP)
(72) Inventor: Itoh, Hayashi, Chiba 271-0045 (JP); Sakata, Tsuyoshi, Kanagawa 241-0816 (JP)
(74) Representative: Betten & Resch

(57) **Abstract**

It is difficult to easily and efficiently collect information such as the viewing and listening history of an audience in a present television and the like.

A receiving device 0100 according to the present invention includes a data receiving section 0103 receiving broadcast data, a data output section 0104 outputting the data received by the receiving section, a history storage section 0107 storing various histories relating to data output and the like.

## Description

### TECHNICAL FIELD OF THE INVENTION

The present invention relates to a receiving device and a transmission device mainly used for BS digital broadcasting, Broadcast Satellite (BS) data broadcasting, Communications Satellite (CS) digital broadcasting, terrestrialwave digital broadcasting and the like.

### PRIOR ART

Following the start of digital broadcasting, the number of television channels which audiences can select increases. To deal with the increase, an audience first watches programs broadcast on channels on a multi-screen simultaneously and then appropriately selects the channel of the program which the audience wants to watch, selects a program having a content which the audience wants to watch from among the programs on the channels using an electronic program guide (EPG) or makes a viewing reservation or a recording reservation.

Also, televisions have been conventionally used to simply watch programs and the like broadcast from broadcast stations. Recently, following the development of the multifunction thereof, the televisions are changing to systems used by audience for replies to questionnaires and placing orders for articles. This may be achieved by a reverse data path, e.g., via telephone, from the viewer's home to an upstream data gathering location.

In addition, since the state of the audience in which he or she watches programs, the replies of the audience to questionnaires on the programs, and the orders of the audience for advertised articles are closely related to demographic factors such as the interest, age, income, life pattern and the like of the audience members themselves, they may serve important information for recognizing the interest and needs of the audience.

Actually, however, such important audience information is not collected very actively by present televisions and the like and the televisions are only used to manage the identification of users by means of Integrated Circuit (IC) cards, also know as smart card. Accordingly, it would be desirable to provide an improved system for storing and transmitting various television viewership information.

The object of the present invention is to provide a receiving device capable of storing various pieces of information associated with an audience, such as the audience rating and a data receiving state of a program which is being broadcast, and to provide a transmission device for transmitting the information.

### SUMMARY OF THE INVENTION

A receiving device according to the present invention includes: a data receiving section receiving broadcast data; a data output section outputting the data received by the receiving section; a history storage section storing various histories related to data output and the like. The histories are a series of operations until the data output, output time, a combination of data identifiers if a plurality of data are output, the presence/absence of a predetermined input, a data output state, an output frequency, a receiving state and the like.

Another receiving device according to the present invention dynamically changes the content of acquired operation histories, and includes: a data receiving section receiving broadcast data; an acquisition section acquiring a data type, an attribute value, a channel number or the like; an operation history management section managing an operation history content for each data type or the like; an operation history content acquisition section acquiring the operation history content from the operation history management section; an operation history acquisition section acquiring an operation history based on the acquired operation history content; and a history storage section storing the acquired operation history.

Yet another receiving device according to the present invention receives a program, includes an audio-visual information receiving section receiving audio-visual information which is information regarding an audience rating for each program, and outputs the audio-visual information received by the audio-visual information receiving section.

A transmission device according to the present invention transmits audio-visual information and operation history information.

Next, embodiments for carrying out the present invention will be described with reference to the drawings.

### BRIEF DESCRIPTION OF THE DRAWINGS

FIG. 1 is a functional block diagram of the first embodiment for carrying out the invention.
FIG. 2 is a view showing a multimedia documents linkage state in the first embodiment for carrying out the invention.
FIG. 3 is a flow chart showing a processing flow in the first embodiment for carrying out the invention.
FIG. 4 is a functional block diagram in the second embodiment for carrying out the invention.
FIG. 5 is a view showing program output time information in the second embodiment for carrying out the invention.
FIG. 6 is a flow chart showing a processing flow in the second embodiment for carrying out the invention.
FIG. 7 is a functional block diagram in the third embodiment for carrying out the invention.
FIG. 8 is a view showing a screen display in the third embodiment for carrying out the invention.
FIG. 9 is a flow chart showing a processing flow in the third embodiment for carrying out the invention.
FIG. 10 is a functional block diagram in the fourth embodiment for carrying out the invention.
FIG. 11 is a flow chart showing a processing flow in the fourth embodiment for carrying out the invention.
FIG. 12 is a functional block diagram in the fifth embodiment for carrying out the invention.
FIG. 13 is a flow chart showing a processing flow in the fifth embodiment for carrying out the invention.
FIG. 14 is a functional block diagram in the sixth embodiment for carrying out the invention.
FIG. 15 is a flow chart showing a processing flow in the sixth embodiment for carrying out the invention.
FIG. 16 is a functional block diagram in the seventh embodiment for carrying out the invention.
FIG. 17 is a flow chart showing a processing flow in the seventh embodiment for carrying out the invention.
FIG. 18 is a functional block diagram in the eighth embodiment for carrying out the invention.
FIG. 19 is a view showing the correspondence between data types and operation history contents in the eighth embodiment for carrying out the invention.
FIG. 20 is a flow chart showing a processing flow in the eighth embodiment for carrying out the invention.
FIG. 21 is a functional block diagram in the ninth embodiment for carrying out the invention.
FIG. 22 is a view showing the correspondence between channel numbers and operation history contents in the ninth embodiment for carrying out the invention.

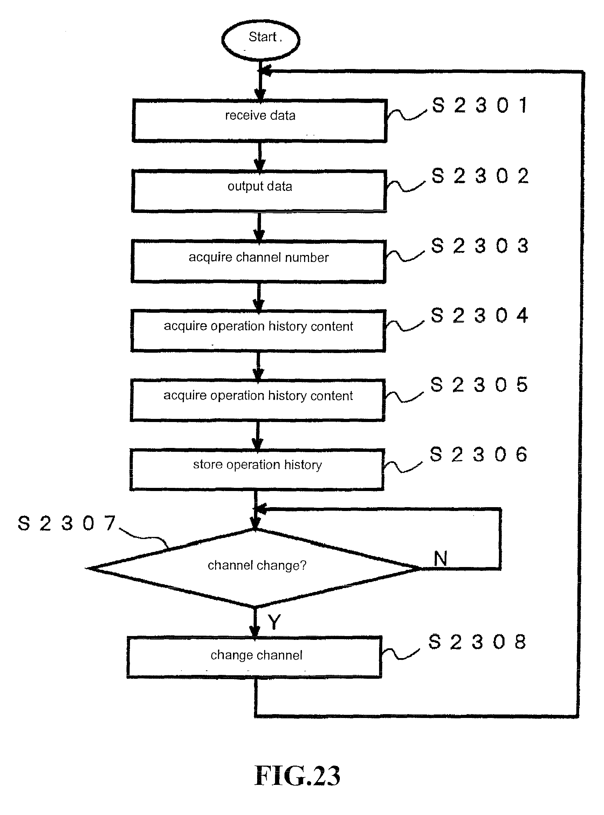

FIG. 23 is a flow chart showing a processing flow in the ninth embodiment for carrying out the invention.
FIG. 24 is a functional block diagram in the tenth embodiment for carrying out the invention.
FIG. 25 is a view showing the correspondence between genres (attribute values) and operation history contents in the tenth embodiment for carrying out the invention.
FIG. 26 is a flow chart showing a processing flow in the tenth embodiment for carrying out the invention.
FIG. 27 is a functional block diagram in the eleventh embodiment for carrying out the invention.
FIG. 28 is a flow chart showing a processing flow in the eleventh embodiment for carrying out the invention.
FIG. 29 is a functional block diagram in the twelfth embodiment for carrying out the invention.
FIG. 30 is a flow chart showing a processing flow in the twelfth embodiment for carrying out the invention.
FIG. 31 is a view showing concrete examples of audio-visual information in the thirteenth embodiment for carrying out the invention.
FIG. 32 is a view showing concrete examples of operation histories in the fourteenth embodiment for carrying out the invention.
FIG. 33 is a functional block diagram in the fifteenth embodiment for carrying out the invention.
FIG. 34 is a flow chart showing a processing flow in the fifteenth embodiment for carrying out the invention.
FIG. 35 is a view showing concrete examples of history acquisition instructions for respective program data in the eleventh embodiment for carrying out the invention.
FIG. 36 is a functional block diagram in the sixteenth embodiment for carrying out the invention.
FIG. 37 is a flow chart showing a processing flow in the sixteenth embodiment for carrying out the invention.
FIG. 38 is a conceptual view showing a history storage manner in the third embodiment for carrying out the invention.

### EXPLANATION OF REFERENCE SYMBOLS

0100: receiving device
0103: data receiving section
0104: data output section
0107: history storage section

### DETAILED DESCRIPTION

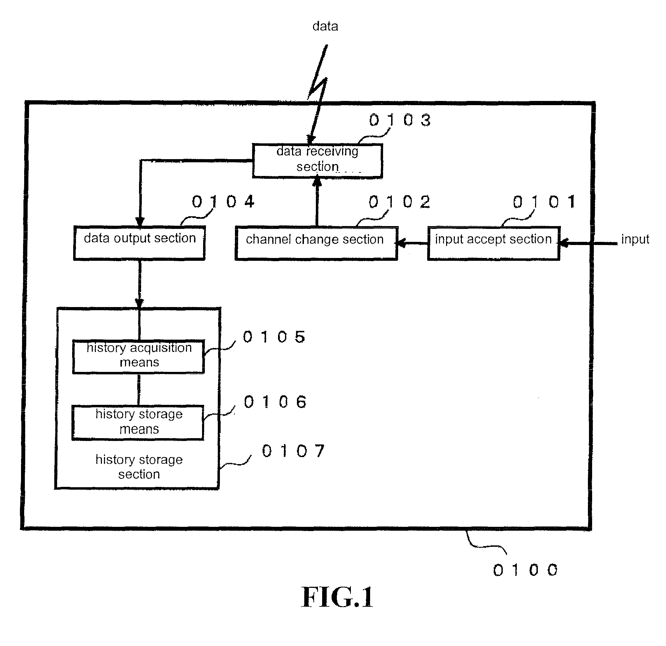

(First Embodiment for Carrying out the Invention) This embodiment for carrying out the invention is a receiving device (0100) shown in FIG. 1, that includes an input accept section (0101) accepting the input of an audience, a channel change section (0102) changing channels based on the accepted input, a data receiving section (0103) receiving data broadcast on the changed channel, a data output section (0104) outputting data received by the data receiving section (0103), and a history storage section (0107) consisting of history acquisition means (0105) for acquiring, as a history, a series of operations until the data is output and history storage means (00106) for storing the acquired history.

The input accept section accepts inputs from, for example, a remote controller, an electronic program guide (EPG), a mouse or the like. In case of using the remote controller, the input accept section corresponds to an infrared receiving section receiving an infrared signal from the remote controller or a driver.

Also, the channel change section executes the change of channels based on the content of the input accepted by the input accept section.

The broadcasting includes all of BS data broadcasting, BS digital broadcasting, CS digital broadcasting, terrestrialwave digital broadcasting, Information Technology (IT) vision (a television service with a bi-directional service), the Internet, CATV and the like that transmit data, pictures, voices, control signals and the like to recipients by using either radio or wires.

The data are, for example, television programs, broadcasting menus (which are menu data for selecting programs and include the electronic program guide), website data, text and the like.

The data receiving section is a tuner which, for example, appropriately receives information transmitted by a carousel system in case of, for example, BS data broadcasting.

The data output section corresponds to a screen on which data is displayed in case of a television, for example, or transmits the received data to the television through a bus or a signal line in case of a set-top box (STB).

It is noted that the above-stated definitions of the respective terms also apply to the other embodiments for carrying out the invention to be described later.

A series of operations stated above include all the behaviors and operations of an audience conducted until a content such as the content of a program is finally displayed on the screen of a television, for example. To be specific, they include, if an audience watches a television program, the selection of the television program by the EPG, by the operation of the remote controller or by the operation of a channel button, and how long the audience watched the program.

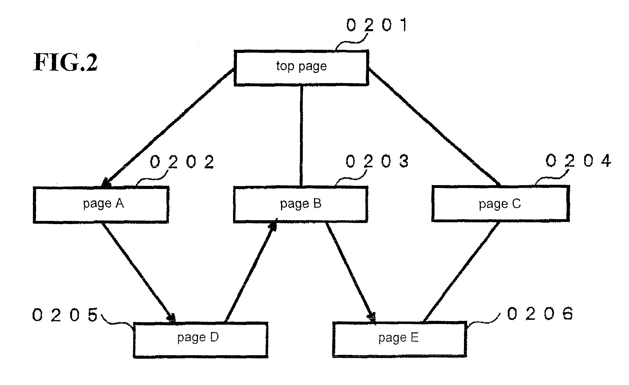

In addition, if the audience watches multimedia documents described in a markup language such as Hyper Text Markup Language (HTML) or Broadcast Markup Language (BML) on a television screen, as shown in FIG. 2, finally selects page E (0206) while links are established from a top page (0201) to page A (0202), page B (0203), page C (0204), page D (0205) and page E (0206), respectively and goes through page A (0202) → page D (0205) → page B (0203) until the audience watches the multimedia documents from the top page (0201) to the page E (0206). This path becomes a series of operations.

Further, if an audience selects the page A (0202) relating to sports from the top page (0201) of a certain broadcast station, watches the page D (0205) relating to the results of professional football games, selects the page B (0203) relating to weather forecasts and then watches the page E (0206) relating to the weather of a particular location such as the Shizuoka district in Japan, then a series of these operations are stored as a history. This indicates that the audience is first interested in football, and lives in the Shizuoka district and watches weather forecasts in relation to the footballs.

Furthermore, a series of these operations include an operation for outputting data based on an instruction signal from a broadcast station as well as the operations conducted by the audience as described above. To be specific, if a disaster such as an earthquake occurs while an audience is watching television, the development and the like of the broadcasting of the situations of the earthquake at respective districts from the broadcast station are included in a series of operations.

The history storage section (0103)(Fig. 1) is a memory storing a series of operations stated above as a history.

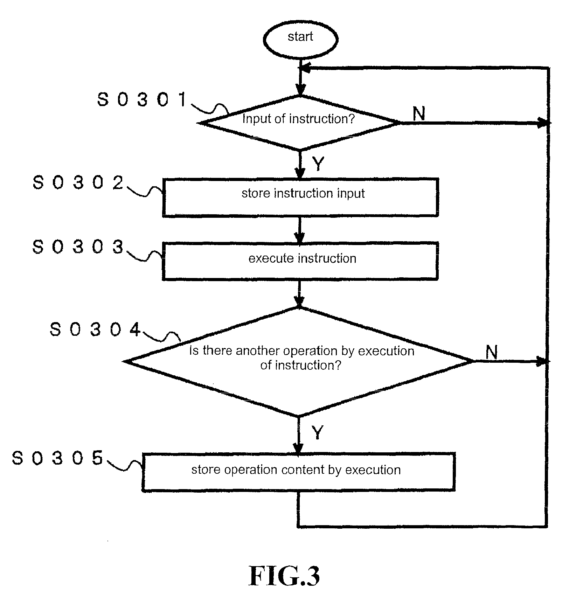

Next, a processing flow in this embodiment for carrying out the invention will be described. As shown in FIG. 3, first, it is detected whether there is an input of an instruction from an audience to change channels or the like (in a step s0301). If there is such an input, the input is stored (in a step s0302). For example, if the channel is changed from a channel 10 to a channel 6, an electronic program guide is displayed, a channel 2 is then finally selected and a volume is raised three times, then all these instruction inputs from the audience are stored as a series of operations.

Then, after the instruction such as the change of channels is executed (in a step s0303), it is detected whether or not there is an other operation conducted following the instruction execution (in a step s0304). If there is an other operation, the content of the operation is also stored as a history (in a step s0305). For example, if the electronic program guide is deleted from a television screen following the selection of the channel 2 after the electronic program guide is displayed, this deletion of the electronic program guide is stored as a history. That is, in this embodiment for carrying out the invention, the storage of the instruction inputs by the audience (in the step s0302) and the content of the other operation generated in response to the instruction inputs are stored as histories. It is noted that the storage of the content of the other operation generated in response to the instruction inputs is not essential to the present invention.

According to the receiving device in this embodiment for carrying out the invention, even if various items of broadcast data are received and one item of the data is finally output, the history is obtained for a series of operations until the output reflects the characteristics of the audience including the first interest and the second interest of the audience. It is, therefore, possible to know the diverse needs of individual audience by storing histories of a series of operations.

This embodiment for carrying out the present invention relates to a device. It is also possible to realize the operations of the device by a computer program and to either record the program on a medium such as a CD-ROM or a floppy disk or to download the program through the Internet.

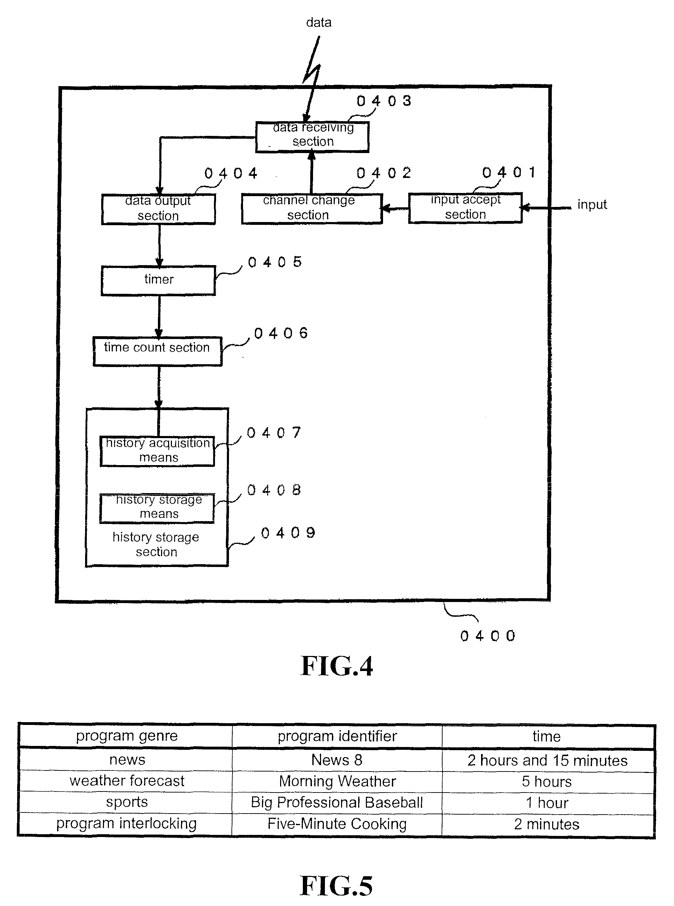

(Second Embodiment for Carrying out the Invention) The second embodiment for carrying out the invention is a receiving device (0400) shown in FIG. 4, which includes an input accept section (0401) accepting the input of an audience, a channel change section (0402) changing channels based on the accepted input, a data receiving section (0403) receiving broadcast data on the changed channel, a data output section (0404) outputting the data received by the receiving section (0403), a timer (0405) actuated simultaneously with the start of the output, a time count section (0406) counting time at which the data is output from the output section (0404) using the timer (0405), and a history storage section (0409) that includes a history acquisition means (0407) for acquiring output time information including the time counted by the time count section (0406) as a history and history storage means (0408) for storing the acquired history.

The time count section (0406) measures a passage of time based on the operation of the timer (0405) from the start to the end of the data output of the output section (0404).

The history storage section (0409) stores the output time information as a history. The output time information includes both type information on the content of the data output from the output section (0404) and the time information obtained by the time count section (0406) or includes only the latter information.

This embodiment for carrying out the invention will be described more specifically. If data on, e.g., news, weather forecast and sports as well as program interlocking data are broadcast, as program genres, on BS digital broadcasting, these pieces of data are appropriately received by the data receiving section (0403) based on the audience's operation of the remote controller and the pages of the news, the weather forecast, the results of sports and the like are displayed (output) on a television screen. As shown in FIG. 5, the history storage section (0409) stores output time information such as "News8" = 2 hours and 15 minutes as the genre of news, "Morning Weather" = 5 minutes as the genre of weather, "Big Professional Baseball" = 1 hour as the genre of sports and "5 Minutes Cooking" = 2 minutes as the genre of program interlocking data. As a result, by examining the history storage section (0409), the characteristic of the audience whose emphasis is relatively put on news is recognized.

It is noted that the program interlocking data is data broadcast in association with the content of a program on the BS digital broadcasting. This is exemplified by cooking recipes as for a cooking program, the profiles of singers' who sing and the title of the CD albums of the singers' now on sale as for a music program, and the like.

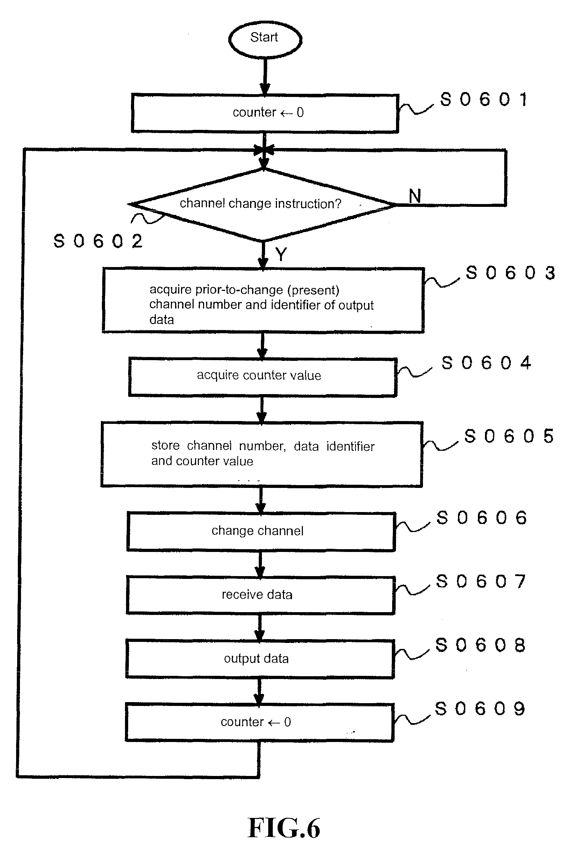

Next, a processing flow in this embodiment for carrying out the invention will be described. As shown in FIG. 6, first, the output time counter is started at 0 (in a step s0601) and it is detected whether or not there is a channel change instruction (in a step s0602). If there is the channel change instruction, the channel number of a prior-to-change (present) channel and the identifier of output data are acquired (in a step s0603). Next, the counter value of the output time of the channel displayed is acquired (in a step s0604) and the acquired counter value, the channel number and output data identifier of the prior-to-change channel are stored (in a step s0605). Thereafter, the channel is changed (in a step s0606), data broadcast on the changed channel is received (in a step s0607), and the received data is output (in a step s0608). At this time, the counter is restarted at 0 (in a step s0609) to count the time until the channel is changed to the next channel.

According to the receiving device in this embodiment for carrying out the invention, if an audience outputs (e.g., views or otherwise selects) various items of data which are being broadcasted, the content of the data which the audience outputs relatively for a long period of time can be examined, so that it is possible to know the inclination of the audience. Also, even if only the output time of data is examined by the receiving device in this embodiment for carrying out the invention irrespectively of the contents of data, it is possible to grasp the states of things in which the respective audience uses data broadcasting. This makes it possible to use them for one-to-one, targeted-marketing for each audience member, and to use the accumulated data for general marketing.

In this embodiment for carrying out the invention and the first embodiment for carrying out the invention, the receiving device is constituted so that the input accept section accepts the input of an audience, the channel change section changes channels based on the input, and data broadcast on the changed channel is received and output. However, the input accept section and the channel change section are not essential to the invention and, therefore, the receiving device is often constituted so that data is automatically received and output. Further, not simply the output time of each content but information indicating the year, month, day, time of day (hour, minute, second) (any of information indicating year, month, day, time of day, information indicating month, day and time of day, information indicating day and time of day and information indicating time of day may be used, and the same shall apply hereafter) when the output of each content was started and the year, month, day, time of day when the output thereof was ended can be acquired as a history. In the latter case, based on standard time information acquired by a built-in clock or communication means, time information indicating the day, time of day and the like when channel change occurred is acquired. Then, this day and time of day information is transmitted together with the output time information on the contents to the history acquisition means and stored by the history storage means.

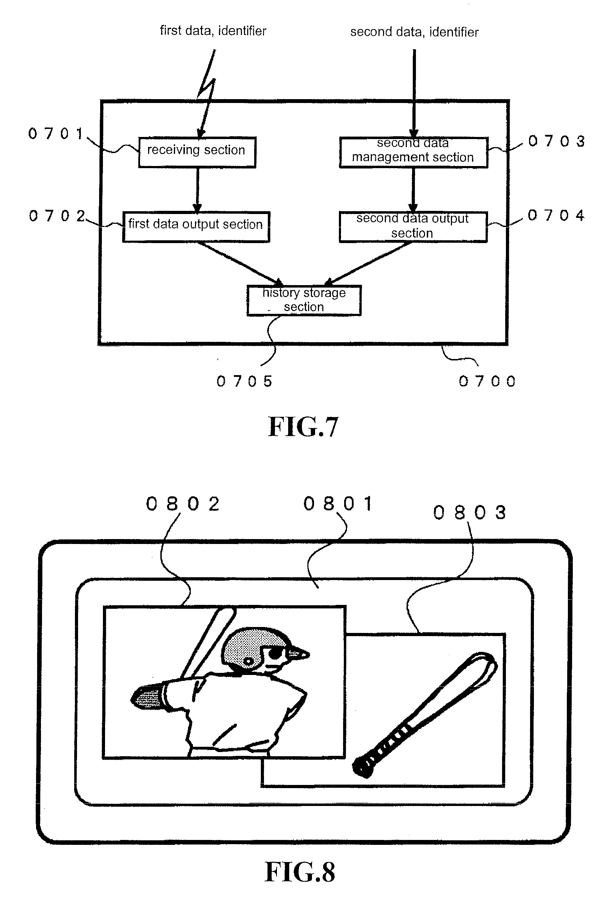

(Third Embodiment for Carrying out the Invention) This embodiment for carrying out the invention is a receiving device (0700) shown in FIG. 7, which device includes a receiving section (0701) receiving the first data broadcast and the first data identifier identifying the first data, the first data output section (0702) outputting the first data received by the receiving section (0701), the second data management section (0703) managing the second data and the second data identifier identifying the second data, the second data output section (0704) outputting the second data managed by the second data management section (0703), and a history storage section (0705) storing the first data identifier of the first data output from the first data output section (0702) and the second data identifier of the second data output from the second data output section (0704).

The first data identifier and the second data identifier are the names, ID's or the like of websites or files output based on the first and second data, respectively.

The second data management section (0703) temporarily or permanently stores the second data broadcast or read from a disk and the identifier of the second data. Accordingly, the management of the management section (0703) is not limited to receiving the second data and the identifier of the second data by broadcasting, but also includes reading the second data and the identifier of the second data from a disk, receiving or reading them and temporarily or permanently storing them.

The history storage section (0705) stores, as histories, in short, information including a pair of the first data identifier and the second data identifier.

This embodiment for carrying out the invention will be described more specifically. As shown in FIG. 8, on a television screen (0801) which uses overlap type windows, for example, a broadcast professional baseball game is displayed on the front window (0802) as the first data and the baseball bat which a batter uses is displayed on the rear window (0803) as the second data by program interlocking, the identifier of the first data and that of the second data are paired with each other and stored by the history storage section (0705) and the information indicating that the audience is, highly likely, a baseball fan is obtained from this history.

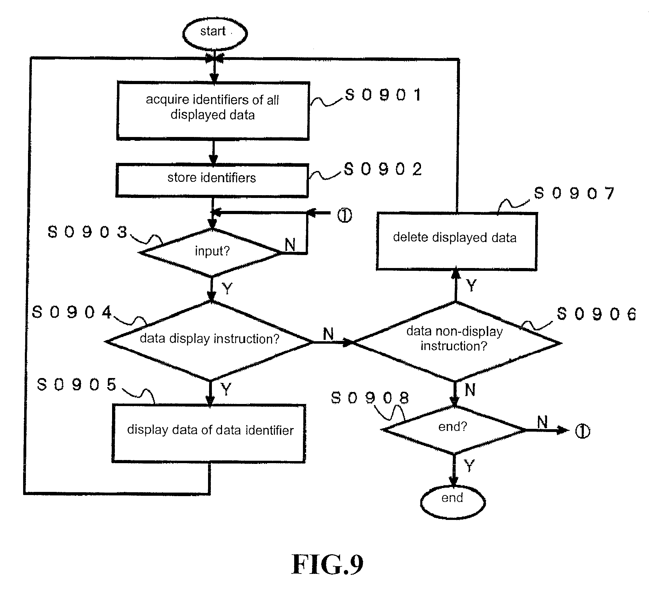

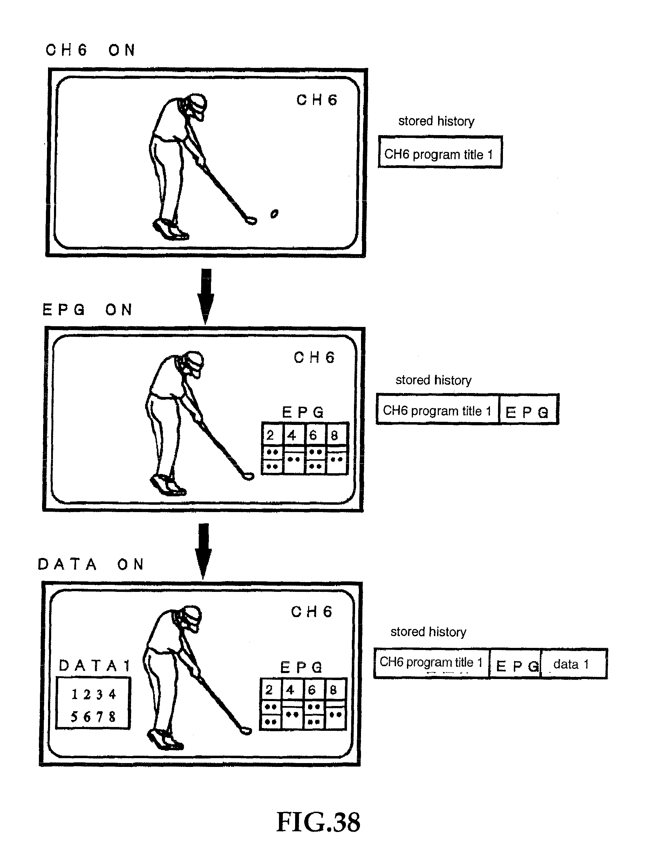

Next, a processing flow in this embodiment for carrying out the invention will be described. As shown in FIG. 9, the identifiers of all displayed data are acquired (in a step s0901), the acquired identifiers are stored as a history (in a step s0902), it is detected whether or not there is the input of an audience (in a step s0903). If there is the input, it is determined whether or not the input is a new data display instruction, i.e., whether the input is an instruction to display data by program interlocking, an instruction to display an electronic program guide or the like (in a step s0904). If the input is a new data display instruction, then the data is displayed (in a step s0905), the identifier of the displayed data is acquired again (in a step s0901), and the acquired identifier is stored as a history (in a step s0902). To be specific, as shown in FIG. 38, if a new electronic program guide is displayed on a part of a screen in an overlapped manner and new data is further displayed at a position different from that of the electronic program guide while a channel 6 is displayed on the entire screen, for example, then a history "CH6, program title 1" indicating that CH6 is selected and the program title 1 is viewed, a history "CH6, program title 1: EPG" indicating that the CH6 is selected, the program title 1 is viewed and the EPG is displayed, and a history "CH6, program title 1: EPG: data 1" indicating that the CH6 is selected, program title 1 is viewed, the EPG is displayed and data 1 is displayed or acquired are stored, respectively.

On the other hand, if the input of the audience is not the new data display instruction (at step s0904), it is determined whether or not the input is a data non-display instruction (in a step s0906). If the input is the non-display instruction, the displayed data is deleted (in a step s0907). At this moment, if a plurality of items of data are displayed simultaneously and one of the data is deleted, for example, then the identifier of the data which is still displayed is acquired again (in a step s0901) and the acquired identifier is stored as a history (in a step s0902). In addition, if the input is not the non-display instruction, it is determined whether or not the input is an end instruction (in a step s0908). If the input is the end instruction, a series of processing steps is finished.

As a result of the processing steps stated above, the identifier of the first displayed data is stored as the first data identifier, the identifier of the second displayed data is stored as the second data identifier, the identifier of the third displayed data is stored as the third data identifier and the identifier of the n-th displayed data is stored as the n-th data identifier.

According to the receiving device in this embodiment for carrying out the invention, it is possible to recognize the things which the audience is interested in at present, the needs of the audience or the like from, for example, a combination of the first data and the second data output by the audience on the television screen or the like.

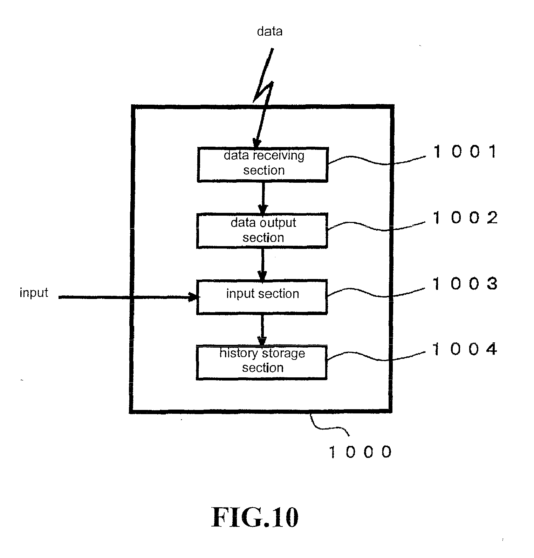

(Fourth Embodiment for Carrying out the Invention) This embodiment for carrying out the invention is a receiving device (1000) shown in FIG. 10, which device includes a data receiving section (1001) receiving broadcast data, a data output section (1002) outputting the data, an input section (1003) accepting a predetermined input with respect to the data, and a history storage section (1004) storing information indicating whether or not the input section (1003) accepted the predetermined input.

The input section (1003) accepts predetermined inputs from the audience with respect to the output data. In case of digital broadcasting, the audience not only receives broadcast data but also sends replies to questionnaires for the received broadcast content, whereby interactive program services are provided. The input section (1003) accepts inputs such as the replies and orders from the audience stated above. The predetermined inputs refers to a reply to a preset questionnaire, an order for a specific article and the like among the audience's inputs conducted in the above-stated interactive services.

The history storage section (1004) stores information as to whether or not the input section (1003) accepted the predetermined inputs as histories, and stores whether or not there was a predetermined input with respect to output data and, if there was such an input, whether or not what the input was like as histories. To be specific, if an audience watches a television shopping program, for example, the history storage section (1004) stores only the number of times of orders for articles or stores information as to what articles were ordered as well as the number of times of orders.

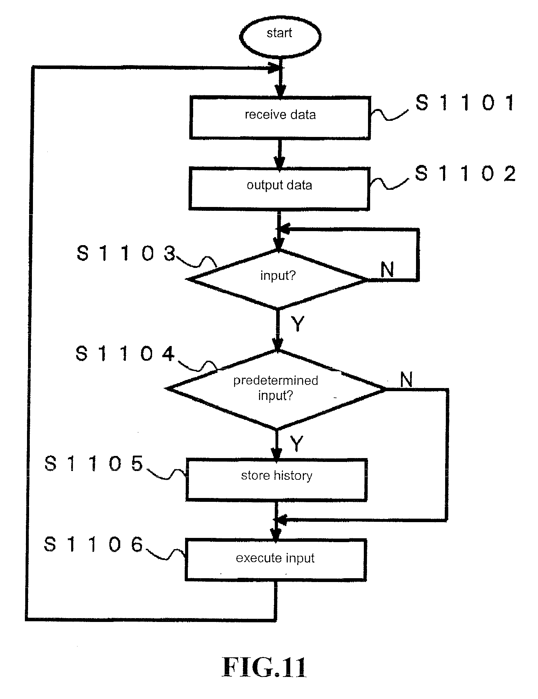

Next, a processing flow in this embodiment for carrying out the invention will be described. As shown in FIG. 11, broadcast data is received (in a step s1101), the received data is output (in a step s1102) and then it is detected whether or not there is an input from an audience (in a step s1103). If there is the input, it is determined whether or not the input is a predetermined input (in a step s1104) and the input is stored as a history (in a step s1105). Thereafter, an instruction based on the predetermined input is executed (in a step s1106). On the other hand, if the input is not the predetermined input, the input is not stored as a history but an instruction based on the input is executed. Also, if the input is a processing end instruction, the processing is finally finished based on this instruction.

According to the receiving device in this embodiment for carrying out the invention, since it is possible to examine the frequency of predetermined inputs from an audience with respect to output data and further to examine the contents of the inputs, it is possible to recognize the self participatory characteristic of the audience (e.g., the likelihood the audience member will participate), the interests and the like when the audience participates.

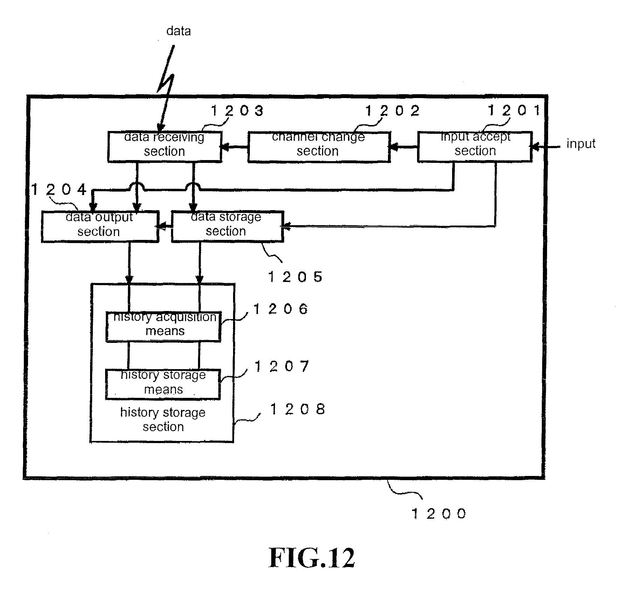

(Fifth Embodiment for Carrying out the Invention) This embodiment for carrying out the invention is a receiving device (1200) shown in FIG. 12, which device includes an input accept section (1201) accepting an input from an audience, a channel change section (1202) for changing channels based on the accepted input, a data receiving section (1203) receiving data broadcast on the changed channel, a data output section (1204) outputting the data received by the receiving section (1203), a data storage section (1205) storing the data, and a history storage section (1208) that includes a history acquisition means (1206) for acquiring information as to whether or not the output section (1204) outputs the data received by the receiving section (1203), as to whether or not the data storage section (1205) stores the data and as to the number of times of data outputs, as histories, and history storage means (1207) for storing the acquired histories.

The data storage section (1205) is, for example, a hard disk and has a function of storing the data irrespectively of whether or not the data received by the receiving section (1203) is output.

The history storage section (1208), in short, stores, as histories, whether the data received by the data receiving section (1203) is not stored by the data storage section (1205) but simply output by the output section (1204), whether the data is stored and output, whether the data is not output by the output section (1204) but stored by the data storage section (1205), or how often the data is output after being stored. If the audience receives data on a certain singer in a music program, for example, the history storage section (1208) stores whether the data is simply viewed (output) on a television screen, whether the received data is stored at a hard disk as data, whether the data is not viewed on the television screen but stored in the disk, or how often the music program stored is viewed on the television screen after being stored therein, as histories.

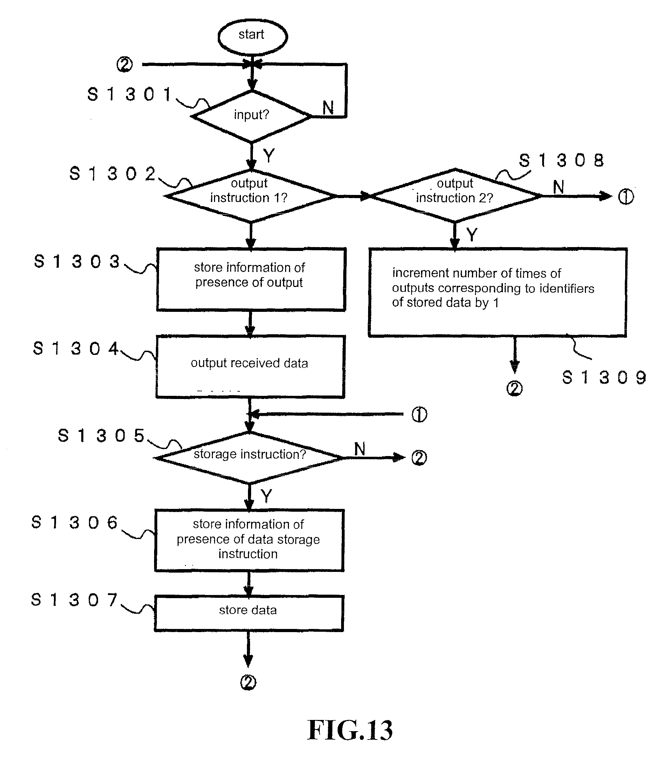

Next, a processing flow in this embodiment for carrying out the invention will be described. As shown in FIG. 13, first, it is detected whether or not there is an input of an instruction from an audience (in a step s1301). If there is the input, it is detected whether or not the input is an output instruction 1 to instantly output the received data (in a step s1302). If the input is the output instruction 1 (e.g., a first output instruction), information indicating that there is an output is stored (in a step s1303) and then the received data is output (in a step s1304). Next, it is detected whether or not there is a received data storage instruction (in a step s1305). If there is the storage instruction, information indicating that there is a storage instruction (in a step s1306) and then the data is stored (in a step s1307).

On the other hand, if the instruction input from the audience is not the output instruction 1, it is detected whether or not the input is an output instruction 2 (e.g., a second output instruction) to output the data already stored in a hard disk or the like (in a step s1308). If the input is the output instruction 2, the number of times of outputs corresponding to the identifier of the stored data is incremented by one (in a step s1309). Also, if the input is not the output instruction 2, it is detected whether or not there is a data storage instruction (in a step s1305) and then the same processing as that stated above is carried out.

According to the receiving device in this embodiment for carrying out the invention, since it is possible to examine whether received data is simply displayed on a television screen or the like, whether the received data is displayed and stored as data or how often the stored data is displayed after being stored, it is possible to easily recognize the interest degree of the audience in the received data.

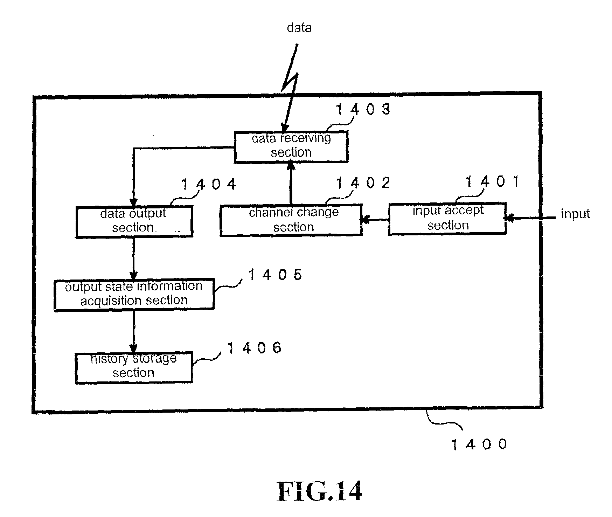

(Sixth Embodiment for Carrying out the Invention) This embodiment for carrying out the invention is a receiving device (1400) shown in FIG. 14, which device includes a data receiving section (1403) receiving data broadcast on a changed channel, a data output section (1404) for outputting the data received by the receiving section (1403), an output state information acquisition section (1405) acquiring output state information indicating the output state of the data output from the output section (1404), and a history storage section (1406) storing the output state information acquired by the output state information acquisition section (1405) as a history.

The data output state information is information as to at which position of the screen of, for example, a television set and with which size the data is displayed, or, if the screen is multiple screens including, e.g., left and right screens, whether the left screen and the right screen are displayed with an equal size, whether one of the left and right screens is displayed with an enlarged size and the other screen is displayed with a reduced size or the like.

The history storage section (1406) appropriately stores as a hisstory the above-stated output state when an audience views a certain broadcast program.

If the television screen of the receiving device displays multiple screens, the left screen is enlarged to display a professional football game live and the right screen is reduced to display a professional baseball game live, then a history that the audience watched the development of the baseball game on the smaller screen while paying attention to the football game on the larger screen is obtained.

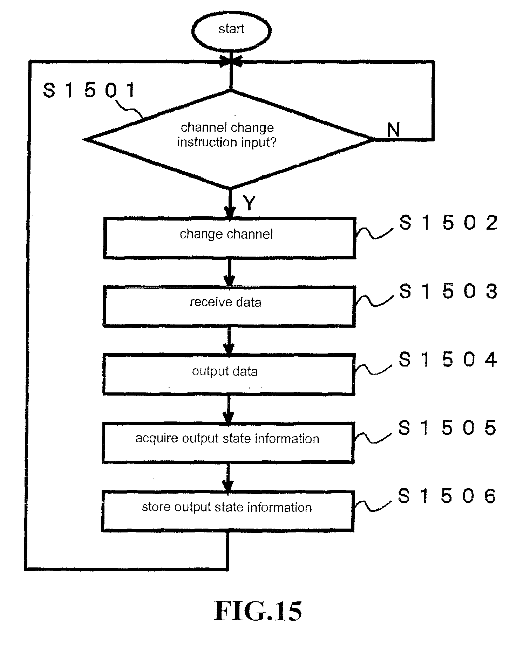

Next, a processing flow in the receiving device in this embodiment for carrying out the invention will be described. As shown in FIG. 15, first, it is detected whether or not there is an input of a channel change instruction from an audience (in a step s1501). If there is such an input, a channel is changed to another channel based on the input (in a step s1502), data broadcast on the changed channel is received (in a step s1503), the received data is output (in a step s1504), output state information regarding the data is acquired (in a step s1505) and the acquired output state information is stored as a history (in a step s1506).

According to the receiving device in this embodiment for carrying out the invention, it is possible to recognize that the audience is interested in the content that is displayed with a large size at the center or near the center of the television screen. In addition, if an audience often displays a plurality of programs and the like on multiple screens, it is possible to recognize that the audience has a usage characteristic that the audience tends to compare a plurality of programs or data.

While the receiving device in this embodiment for carrying out the invention is constituted to store only the output state of programs on the screen based on the channel change instruction, the present invention is not limited thereto but the present invention stores other various output state information including the setting of a volume and the display of an electronic program guide as histories.

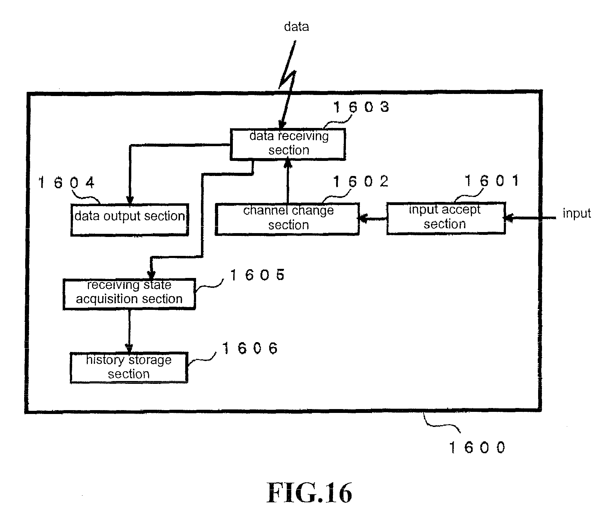

(Seventh Embodiment for Carrying out the Invention) This embodiment for carrying out the invention is a receiving device (1600) shown in FIG. 16, which device includes an input accept section (1601) accepting an input from an audience, a channel change section (1602) changing channels based on the accepted input, a data receiving section (1603) receiving data broadcast on the changed channel, a data output section (1604) outputting the data, a receiving state acquisition section (1605) acquiring a receiving state when the receiving section (1603) receives the data, and a history storage section (1606) storing the receiving state received by the receiving state acquisition section (1605) as a history.

The receiving state acquisition section (1605) specifically acquires information such as the intensity of a received radio wave, the presence/absence of noise and the like with respect to the television of an individual audience member.

The history storage section (1606) stores the above-stated receiving state information in each time zone as a history.

In case of ordinary analog broadcasting, if there is a hill or mountain nearby, a high-rise apartment is built, a high voltage power transmission line is provided, a wireless enthusiast lives nearby or an electric equipment causing noise is used in a household, then a radio interference tends to occur. In case of digital broadcasting, it is possible to perform far better data transmission and receiving than with analog broadcasting. However, there are cases where because of the inappropriate direction of a parabola antenna or the like, the received data is imperfect and programs cannot be provided to an audience with a high image quality, and a high tone quality which the digital broadcasting inherently exhibits. The history storage section (1606) acquires, for example, a radio wave receiving state in each time zone and determines whether good broadcast data receiving is performed from the stored history, acquires information as to whether or not broadcast data is received in each time zone and grasps the number of times of broadcast receiving of each audience in each time zone, or acquires broadcast, program data or the like received and grasps the interest of each audience from the stored history.

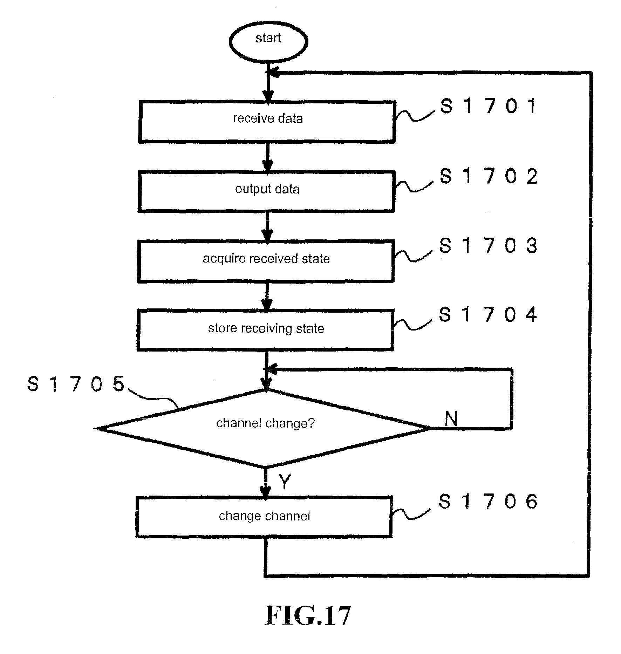

Next, a processing flow in the receiving device in this embodiment for carrying out the invention will be described. As shown in FIG. 17, first, data on a previously received channel is received by a last memory (in a step s1701) and the received data is output (in a step s1702). At the same time, a receiving state in which the data is received is acquired (in a step s1703) and the acquired receiving state is stored (in a step s1704). Also, it is detected whether or not there is a channel change instruction (in a step s1705). If there is the instruction, the channel is changed to another channel based on the instruction (in a step s1706), data broadcast on the changed channel is received (in a step s1701) and the received data is output (in a step s1702) and, at the same time, a receiving state in which the data is received is acquired again (in a step s1703). During this time, a receiving end instruction may be accepted. If there is such an instruction, receiving is finished (not shown).

According to the receiving device in this embodiment for carrying out the invention, it is possible to grasp the receiving state of each audience, to grasp the interest of the audience and, if there is an audience having a bad receiving state, to take measures to improve the receiving state.

The receiving devices in the first to seventh embodiments for carrying out the invention stated so far acquire and store history contents with respect to the same operations. Receiving devices in the eighth to twelfth embodiments for carrying out the invention to be described hereinafter dynamically change and store history contents to be acquired.

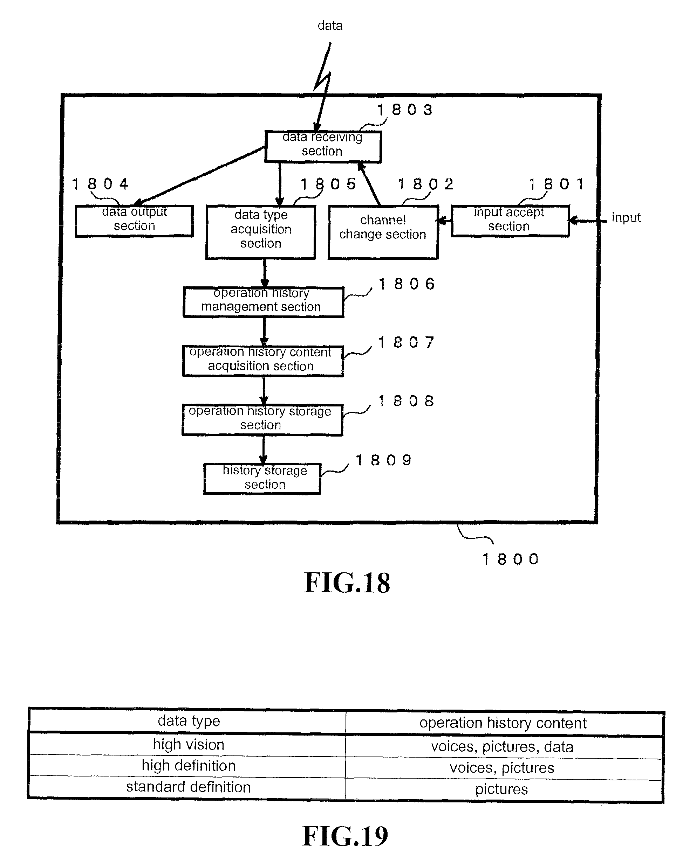

(Eighth Embodiment for Carrying out the Invention) This embodiment for carrying out the invention is a receiving device (1800) shown in FIG. 18, that includes an input accept section (1801) accepting an input, a channel change section (1802) for changing channels when a channel change instruction is accepted, a data receiving section (1803) for receiving data broadcast on the changed channel, a data output section (1804) for outputting the received data, a data type acquisition section (1805) for acquiring the type of the data received by the receiving section (1803), an operation history management section (1806) managing an operation history content for each data type, an operation history content acquisition section (1807) for acquiring an operation history content corresponding to the data type acquired by the type acquisition section (1805) from the operation history management section (1806), an operation history content acquisition section (1807) for acquiring the operation history content corresponding the the data types obtained by the type acquisition section (1805) from the operation history management section (1807), an operation history storage section (1808) acquiring an operation history from the operation history content acquired by the operation history content acquisition section (1807), and a history storage section (1809) storing the operation history acquired by the operation history acquisition section (1808).

In this embodiment for carrying out the invention, in short, a finally stored history is changed depending on which the data type is, for example, high vision (HV), high definition (HD) or standard definition (SD).

The data type acquisition section (1805) acquires information on a type such as high vision stated above. The operation history management section (1806) manages an operation history content for each data type in advance,e.g., types of operation histories. The operation history content acquisition section (1807) fetches an operation history content corresponding to a received data type from operation history contents corresponding to the various data types managed by the operation history management section (1806). The operation history storagesection (1808) acquires a history which actually occurred for the fetched operation history content. The history storage section (1808) stores the acquired operation history.

The operation history management section (1806) manages the operation history content corresponding to a data type as exemplified as follows. As shown in FIG. 19, the operation history management section (1806) manages voices, pictures and data as a history content corresponding to the high vision (HV), manages voices and pictures as a history content corresponding to the high definition (HD), and manages pictures as a history content corresponding to the standard definition (SD).

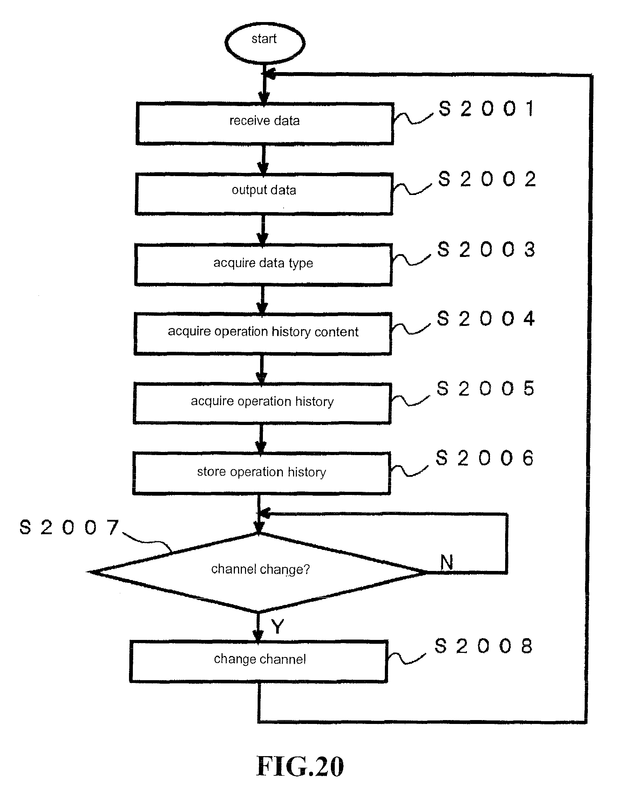

Next, a processing flow in the receiving device in this embodiment for carrying out the invention will be described. As shown in FIG. 20, first, data on a previously received channel is received by a last memory (in a step s2001), the received data is output (in a step s2002) and the type of the received data, e.g., high vision (HV), high definition (HD) or standard definition (SD) is acquired (in a step s2003). An operation history content corresponding to the acquired type, i.e., pictures, voices, data and/or the like are acquired (in a step s2004), a history is actually acquired based on the acquired predetermined operation history content (in a step s2005) and the acquired operation history is stored (in a step s2006). Also, it is detected whether or not there is a channel change instruction (in a step s2007). If there is such an instruction, the channel is changed based on the instruction (in a step s2008), data broadcast on the changed channel is received (in a step s2001), the received data is output (in a step s2002), the type of the received data is acquired again (in a step s2003) and the operation history is finally stored as in the case of the above (in a step s2006). In addition, during this time, a receiving end instruction is accepted. If there is such an instruction, receiving is finished.

According to the receiving device in this embodiment for carrying out the invention, it is possible to acquire an appropriate operation history corresponding to the type of received data.

Also, in this embodiment for carrying out the invention, the acquired operation history content is changed according to the type of the received data. The acquired operation history content is often changed according to specific day and time of the day, a specific day of the week, and/or specific time when the data is received. For example, it is convenient to change an operation history content to be acquired according to New Year's Eve, New Year's Day, long consecutive holidays or birthdays or wedding anniversaries of the family or relatives of the owner of the receiving device. This is because it is highly likely that on these days, viewing trends are changed compared with ordinary days. In addition, by doing so, it is possible to acquire such histories more easily if viewing trends are to be examined in more detail than before or viewing trends are to be grasped for specific purposes. Also, the term "specific" means not only a case which takes place only once and a case which takes place annually but also a case which takes place monthly, yearly or in units of hours. For example, detailed histories are acquired and stored on Saturday and Sunday when many people have a holiday or day off, and on these days of the week, more detailed histories are acquired and stored around seven to eight o'clock in the afternoon which is dinner time. On the other hand, on days of the week other than Saturday and Sunday, rough histories may be acquired and stored.

If the operation history content to be acquired is changed according to day(s) of the week and/or time as stated above, the receiving device (1800) in this embodiment for carrying out the invention includes a clock section in place of the data type acquisition section (1805).

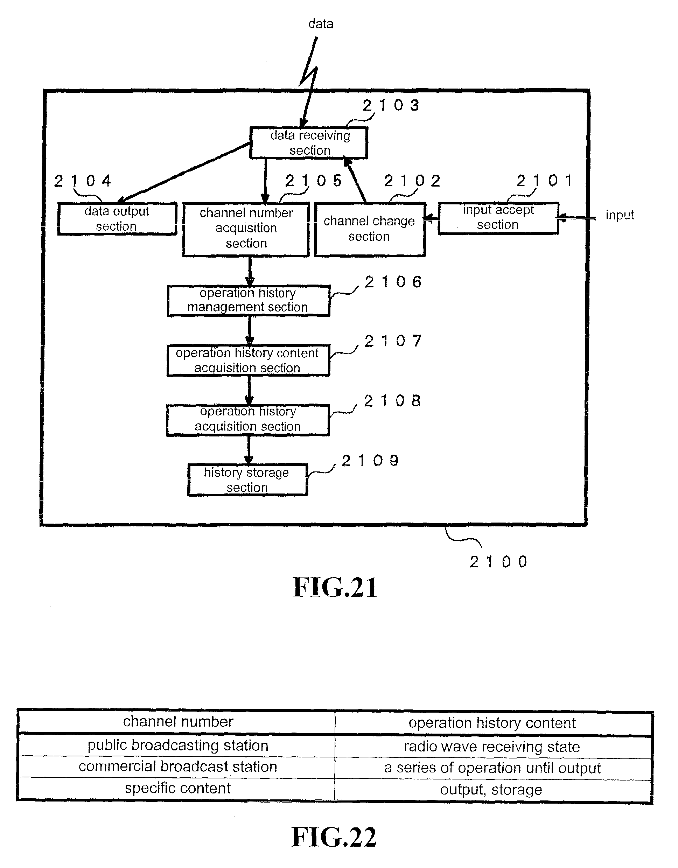

(Ninth Embodiment for Carrying out the Invention) This embodiment for carrying out the invention is a receiving device (2100) shown in FIG. 21, which includes a channel number acquisition section (2105) in place of the data type acquisition section (1805) in the eighth embodiment for carrying out the invention. To be specific, the receiving device includes an input accept section (2101) accepting an input, a channel change section (2102) changing channels when a channel change instruction is accepted, a data receiving section (2103) receiving data broadcast on the changed channel, a data output section (2104) outputting the received data, a channel number acquisition section (2105) for acquiring the channel number of the data received by the receiving section (2103), an operation history management section (2106) for managing an operation history content for each channel number, an operation history content acquisition section (2107) for acquiring an operation history content corresponding to the channel number acquired by the channel number acquisition section (2105) from the operation history management section (2106), an operation history acquisition section (2108) for acquiring an operation history from the operation history content acquired by the operation history content acquisition section (2107), and a history storage section (2109) for storing the operation history acquired by the operation history acquisition section (2108).

The operation history management section (2106) manages the operation history content corresponding to the channel number as exemplified as follows. As shown in FIG. 22, in case of, for example, the channel numbers of the NHK (Japan Broadcasting Corporation), it is assumed that audience are relatively in middle and upper age brackets and, as in the case of the seventh embodiment for carrying out the invention, a radio wave receiving state is set as a history content. In case of the channel numbers of commercial broadcast stations, it is assumed that audience are in various age brackets and, as in the case of the first embodiment for carrying out the invention, a series of operations until data is output are set as a history content. Further, in case of paid channel numbers (e.g., pay per view) on which only certain, specific contents are broadcast, whether received data is simply output or output and stored in a hard disk is set as a history content as in the case of the fifth embodiment for carrying out the invention.

In the above-stated management examples, in case of the channel numbers of the public broadcast station, radio wave receiving states are examined for elderly audience who may be poor at the adjustment of equipment such as a television set, in case of the channel numbers of the commercial broadcast stations, the operation characteristics of audience are examined based on a series of operation histories, and in case of the channel numbers of specific contents, the degree of interest in each content broadcast is examined.

Next, a processing flow in this embodiment for carrying out the invention will be described. First, data on a channel previously received is received by a last memory (in a step s2301), the received data is output (in a step s2302) and also the channel number of the received data is acquired (in a step s2303). Next, an operation history content corresponding to the acquired channel number is acquired (in a step s2304), a history is actually acquired based on the acquired predetermined operation history content (in a step s2305), and the acquired operation history is stored (in a step s2306). Also, it is detected whether or not there is a channel change instruction (in a step s2307). If there is such an instruction, the channel is changed based on the instruction (in a step s2308) and data broadcast on the changed channel is received (in a step s2301). The received data is output (in a step s2303) and the operation history is finally stored as in the case of the above (in a step s2302). During this time, a receiving end instruction may be accepted. If there is such an instruction, receiving is finished.

According to the receiving device in this embodiment for carrying out the invention, as already stated above, it is possible to acquire an operation history corresponding to each channel number. Due to this, by examining the operation history, it is possible to store an appropriate history according to the broadcast content of a channel the data on which audience normally receives.

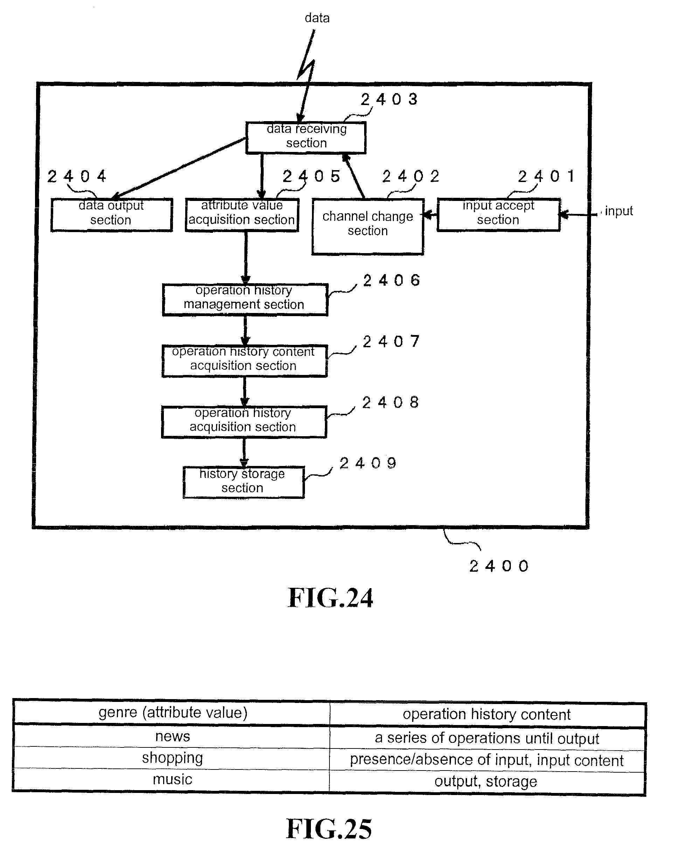

(Tenth Embodiment for Carrying out the Invention) In this embodiment for carrying out the invention, a history to be acquired is changed based on the attribute value of received data. To be specific, this embodiment for carrying out the invention is a receiving device (2400) shown in FIG. 24, which includes a data output section (2404) for outputting received data, an attribute value acquisition section (2405) for acquiring the attribute value of the received data, an operation history management section (2406) for managing an operation history content for each attribute value, an operation history content management section (2407) for acquiring an operation history content corresponding to the attribute value acquired by the attribute value acquisition section (2405) from the operation history management section (2406), an operation history acquisition section (2408) for acquiring an operation history from the operation history content acquired by the operation history content acquisition section (2407), and a history storage section (2409) for storing the operation history acquired by the operation history acquisition section (2408).

The attribute value relates to the received data. If the data is a program, for example, the attribute data is a genre such as news, weather forecast, shopping, sports, music or the like, the time zone of the program, the channel number of the program in and on which the program is broadcast, or the like.

The operation history management section (2406) manages the operation history content corresponding to the attribute value as exemplified as follows. If the data is a program and the attribute value thereof is a genre, then a series of operations until the data is finally output are set as a history content as for a news program as in the case of the first embodiment for carrying out the invention, the presence/absence of an input from an audience, the type of an article ordered by the input or the like is set as a history content as for a shopping program as in the case of the fourth embodiment for carrying out the invention, whether a received music is simply output or output and stored in a hard disk is set as a history content as for a music program as in the case of the fifth embodiment for carrying out the invention, as shown in FIG. 25.

In the management examples stated above, in case of the news program, it is possible to recognize in what series of procedures, an individual audience tends to view the news program in many fields including politics, economy, local, sports and the like. In case of the shopping program, it is possible to recognize the purchase appetite, the attracting article group and the like of an individual audience from the number of times of orders (inputs) and the contents of the orders of the audience. In case of the music program, it is possible to accurately grasp the degree of an interest in each music listened to by examining the output of the music by the audience, the presence/absence of storage and the like.

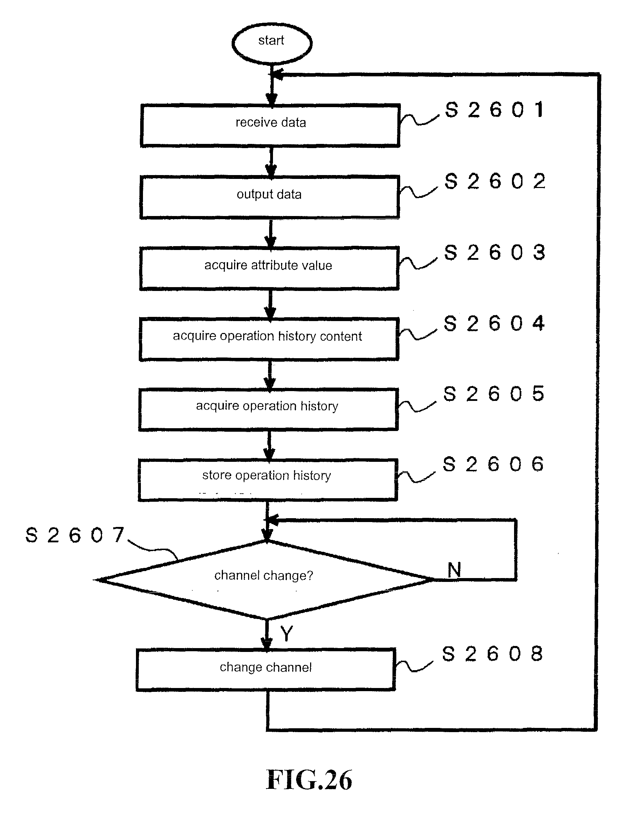

Next, a processing flow in this embodiment for carrying out the invention will be described. As shown in FIG. 26, first, data on a channel previously received is received by a last memory (in a step s2601), the received data is output (in a step s2602) and also the attribute value of the received data is acquired (in a step s2603). Next, an operation history content corresponding to the acquired attribute value is acquired (in a step s2604), a history is actually acquired based on the acquired predetermined operation history content (in a step s2605), and the acquired operation history is stored (in a step s2606). Also, it is detected whether or not there is a channel change instruction (in a step s2607). If there is such an instruction, the channel is changed based on the instruction (in a step s2608) and data broadcast on the changed channel is received (in a step s2601). The received data is output (in a step 2602). Also, the attribute value of the received data is acquired again (in a step s2603) and the operation history is finally stored as in the case of the above (in a step s2602). During this time, a receiving end instruction may be accepted. If there is such an instruction, receiving is finished.

According to the receiving device in this embodiment for carrying out the invention, an operation history corresponding to the genre or the like of the received program and the history usage efficiency is thereby improved.

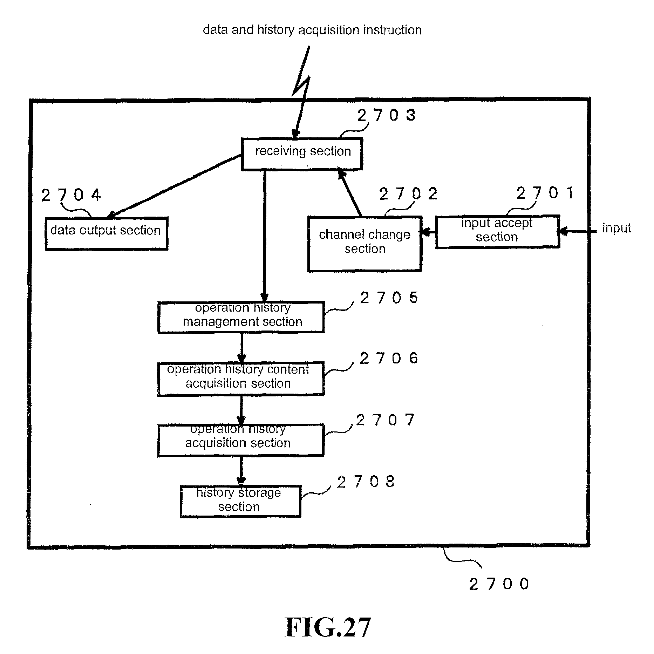

(Eleventh Embodiment for Carrying out the Invention) In this embodiment for carrying out the invention, the operation history of an audience is acquired in accordance with an instruction transmitted from a broadcast station side. To be specific, this embodiment for carrying out the invention is a receiving device (2700) shown in FIG. 27, which includes an input accept section (2701) for accepting an input, a channel change section (2702) for changing channels when a channel change instruction is accepted, a receiving section (2703) for receiving a history acquisition instruction which is an instruction to acquire data broadcast on the changed channel and an operation history, a data output section (2704) for outputting the received data, an operation history management section (2705) for managing an operation history content for each history acquisition instruction, an operation history content acquisition section (2706) for acquiring an operation history content corresponding to the history acquisition instruction acquired by the receiving section (2703)from the operation history management section (2705), an operation history acquisition section (2707) for acquiring an operation history from the operation history content acquired by the operation history content acquisition section (2706), and a history storage section (2708) for storing the operation history acquired by the operation history acquisition section (2707).

The history acquisition instruction is a command as to what operation history content of an audience is to be acquired by the receiving device (2700) and the instruction is transmitted while being multiplexed with the data broadcast.

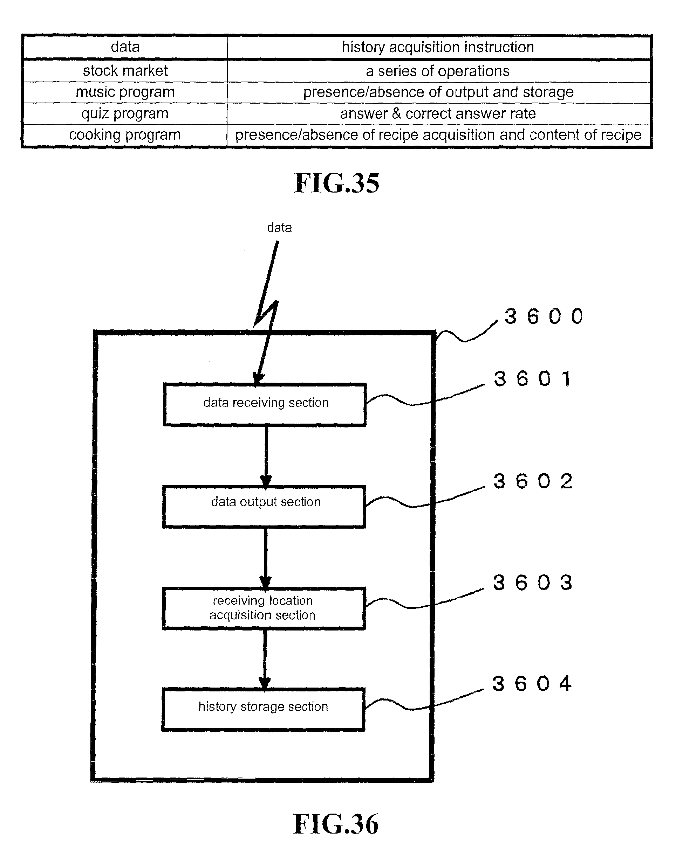

This embodiment for carrying out the invention will be described more specifically. A history acquisition instruction appropriate for broadcast data is added to the data. As shown in FIG. 35, for example, if an audience receives stock market data, a history acquisition instruction to acquire a series of operations of the audience is added to the data as in the case of the first embodiment for carrying out the invention. If the audience receives a music program, a history acquisition instruction to acquire a history as to whether the received music is simply output or whether the received music is output and stored in a hard disk is added to the data as in the case of the fifth embodiment for carrying out the invention. If the audience receives a quiz program, an instruction to acquire, as a history, answers to quizzes and a correct answer rate is added to the data. If the audience receives a cooking program, an instruction to acquire the presence/absence of recipes and the contents of the acquired recipes as a history is added to the data.

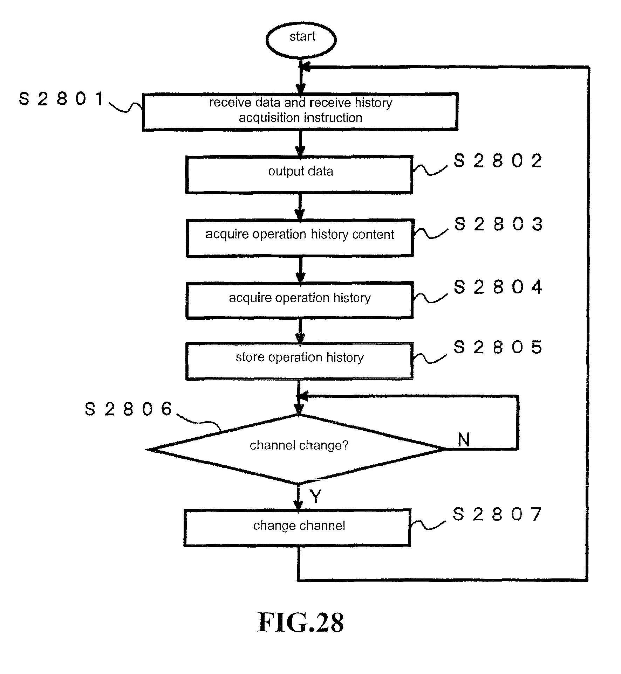

Next, a processing flow in the receiving device in this embodiment for carrying out the invention will be described. As shown in FIG. 28, first, data on the channel previously received and a history acquisition instruction are received by a last memory (in a step s2801), the received data is output (in a step s2802) and an operation history content is acquired in accordance with the history acquisition instruction (in a step s2803). A history is actually acquired based on the acquired predetermined history acquisition instruction (in a step s2804) and the acquired operation history is stored (in a step s2805). Also, it is detected whether or not there is a channel change instruction (in a step s2806). If there is such an instruction, then the channel is changed based on the instruction (in a step s2807), data and a history acquisition instruction broadcast on the changed channel are received again (in a step s2801) and the received data is output (in a step s2802). At the same time, an operation history content is acquired again according to the new history acquisition instruction (in a step s2803) and the operation history is finally stored as in the case of the above (in a step s2805). During this time, a receiving end instruction may be accepted. If there is such an instruction, receiving is finished.

According to the receiving device in this embodiment for carrying out the invention, if data is transmitted from the broadcast station side to the audience side, operation history acquisition corresponding to the characteristic of the data is automatically carried out on the audience side. In addition, even if the history acquisition instruction is irrelevant to the data characteristic, it is advantageously possible for the broadcast station side to change the many history acquisitions on the audience sides in real time.

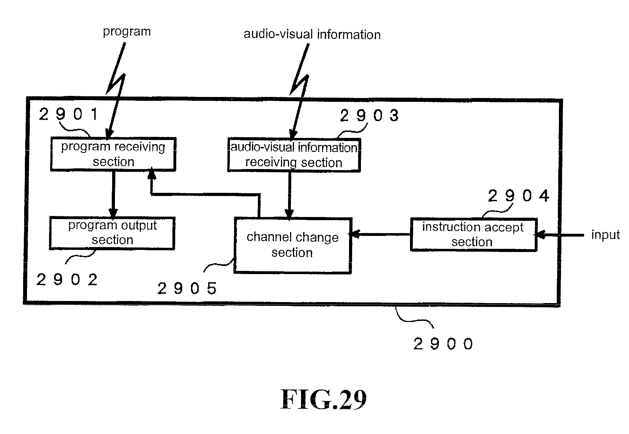

(Twelfth Embodiment for Carrying out the Invention) This embodiment for carrying out the invention is a receiving device (2900) shown in FIG. 29, which device includes a program receiving section (2901) for receiving a program, a program output section (2902) for outputting the received program, an audio-visual information receiving section (2903) for receiving audio-visual information which is information related to the audience rating of each program, an instruction accept section (2904) for accepting a channel change instruction, and a channel change section (2905) for changing channels based on the audio-visual information received by the audio-visual information receiving section (2903) when a channel change instruction is accepted from the instruction accept section (2904).

The audio-visual information receiving section (2903) receives information as to each audience rating of a program on a different channel from that of a certain program which the audience is watching in a time zone in which the audience is watching the certain program. It is noted that this received audio-visual information is displayed on a screen in case of a television and output to a television in case of an STB.

The instruction accept section (2904) accepts a channel change instruction if an audience member wants to change a program which the audience member is now watching to another program and pushes a recommended program button provided on, for example, a remote controller.

The channel change section (2905) changes the present channel to a channel having the highest audience rating among programs on different channels broadcast in the same time zone if the channel change instruction is accepted by the instruction accept section (2904). Also, if the audience wants to change the program on the channel thus changed to yet another program on the different channel and pushes again the recommended program button on the remote controller, then the channel change section (2905) changes the channel to the different channel having the second highest audience rating.

For example, if a certain audience is watching a travel program and the audience pushes a recommended program button on the remote controller, then the program is changed to a Masters live golf tournament program having the highest audience rating based on the audio-visual information. If the audience has no interest in golf and pushes the recommended program button on the remote controller again, then the program is changed to a quiz program having the second highest audience rating based on the audio-visual information.

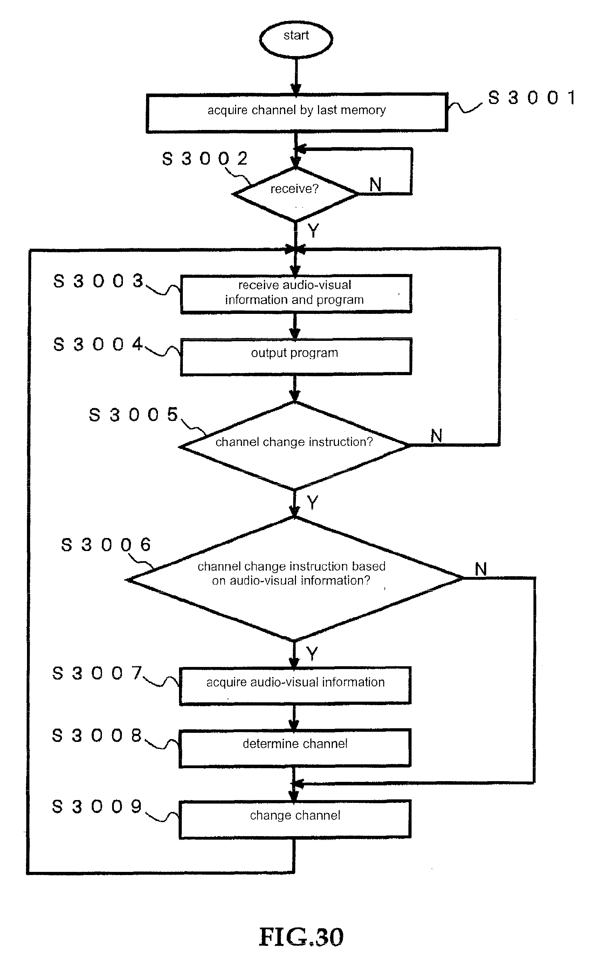

Next, a processing flow in the receiving device in this embodiment for carrying out the invention will be described. As shown in FIG. 30, first, a previously received channel is acquired by a last memory (in a step s3001), and then it is detected whether or not there is a receiving instruction (in a step s3002). If there is such an instruction, audio-visual information and a program is received (in a step s3003). Then, the received program is output (in a step s3004). A channel change instruction from an audience is accepted (in a step s3005). If there is such an instruction, it is determined whether or not the instruction is a channel change instruction based on the audio-visual information (in a step s3006). If so, the previously received audio-visual information is acquired (in a step s3007), a channel is determined based on the audio-visual information (in a step s3008) and the present channel is changed to the determined channel based on the determination (in a step s3009).

On the other hand, if the channel change instruction is not the channel change instruction based on the audio-visual information, the channel is changed irrespective of the audio-visual information (in a step s3009). Also, during this time, a receiving end instruction may be received. If there is such an instruction, receiving is finished.

According to the receiving device in this embodiment for carrying out the invention, if the audience is to change program channels, the audience can always, consecutively watch programs on different channels in the order of the audience ratings.

The receiving device in this embodiment for carrying out the invention includes, as explained above, the audio-visual information receiving section (2903), the channel change instruction accept section (2904) and the channel change section (2905). However, the present invention is not limited thereto and the receiving device may include only the audio-visual information receiving section (2903). In this case, the audience rating of each program on a different channel or the program which the audience is now watching received by the audio-visual information receiving section (2903) is finally displayed on the television screen and the audience changes channels based on this display. Here, the meaning of the program contains data broadcasting described in the BML or the like. The audience rating of data broadcasting or the like may be obtained by acquiring the number of audience members based on whether pages included in the data broadcasting are viewed and listened to at the time of acquiring audience rating data and dividing the number of audience members by the entire number of households or the number of people, or may be obtained by acquiring the number of audience members based on whether pages included in the data broadcasting are viewed and listened to in a certain time zone with time set wider and judging the number of audience members based on the entire number of households or the number of people. It suffices that the audience rating serves as a measure indicating the degree of interest in the data broadcasting, and that the audience rating of a broadcast program other than the data broadcasting can be compared with the audience rating of the data broadcasting based on a certain rule.

(Thirteenth Embodiment for Carrying out the Invention) This embodiment for carrying out the invention is a transmission device disposed on a broadcast station side, which transmits audio-visual information to the receiving device in the twelfth embodiment for carrying out the invention disposed on the audience side.

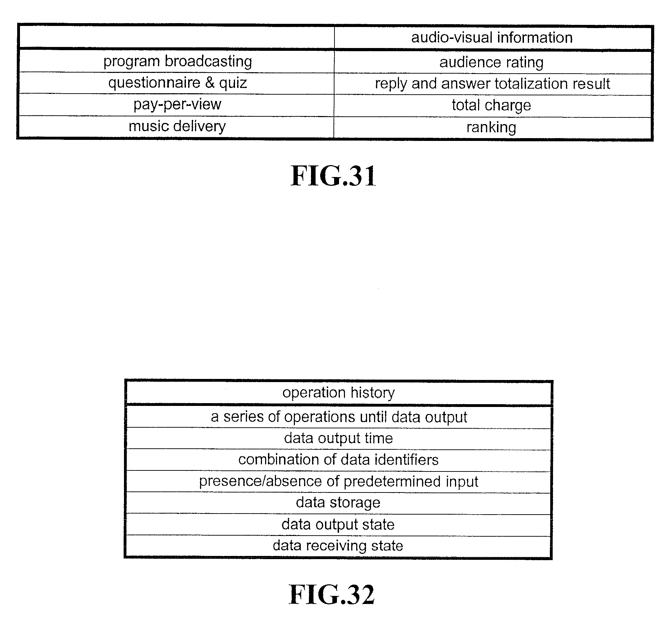

The audio-visual information is information relating to audience such as the viewing and listening state, the reply state and the like of audience. To be specific, as shown in FIG. 31, the information may include audience ratings for program broadcasting, reply and answer totalization results (e.g., totals or summaries) for questionnaires and quizzes in programs, the total charge of a program which audience watches for pay-per-view, the ranking of a delivered song or album for music delivery or the like. Also, the transmission includes various communication means including transmission by broadcasting, that through the internet and the like.

In case of the transmission device in this embodiment for carrying out the invention, a broadcast station, for example, totalizes replies to a questionnaire received from audience and appropriately transmits the totalization result based on a request from an audience, and the audience receives the result of the questionnaire thus transmitted to thereby know the trend of the other audience or to perform a self analysis.

According to the transmission device in this embodiment for carrying out the invention, therefore, it is possible to provide varied audio-visual information acquired by the broadcast station to audience and to thereby provide interactive broadcast services.

(Fourteenth Embodiment for Carrying out the Invention) This embodiment for carrying out the invention is a transmission device, as in the case of the thirteenth embodiment for carrying out the invention, disposed on a broadcast station, which transmits an instruction to transmit information relating to various operation histories received by the receiving device described in any of the above embodiments for carrying out the invention, to the receiving device.

To be specific, the operation histories are, as shown in FIG. 32, a series of operation until data is output, data output time, a combination of data identifiers, the presence/absence of a predetermined input, data storage, a data output state, a data receiving state and the like.

The transmission device in this embodiment for carrying out the invention often transmits time information which is information relating to transmission time together with the instruction to transmit the information relating to the operation histories. To be specific, the transmission device transmits the same time information to respective audience members so that a broadcast station can collectively acquire the operation histories of the respective audience member, or transmits a program end time as the time information so that the broadcast station can acquire the operation histories of the respective audience with respect to a program which the audience member is watching in accordance with the end of the program.

According to the transmission device in this embodiment for carrying out the invention, it is possible for a broadcast station to actively acquire various operation history information stored by the receiving devices of audience from the broadcast station side and to acquire operation history information at desired time.

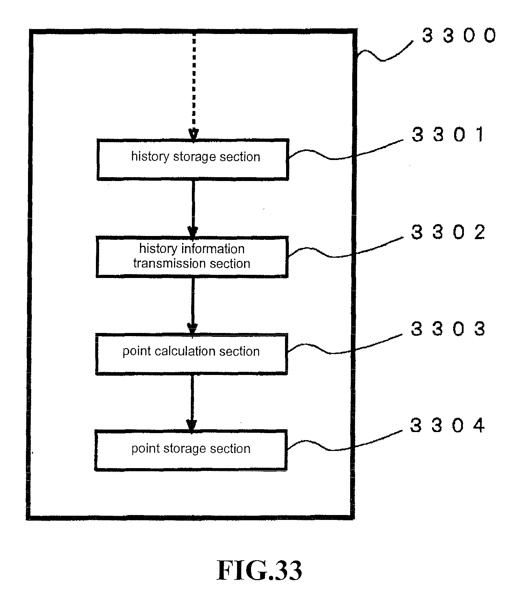

(Fifteenth Embodiment for Carrying out the Invention) As shown in FIG. 33, this embodiment for carrying out the invention includes a receiving device (3300) according to the preceding first to eleventh embodiments for carrying out the invention, which further includes a history information transmission section (3302) transmitting information stored in the history storage section (3301), a point calculation section (3303) for calculating points corresponding to the transmission of information from the history information transmission section (3302) and a point storage section (3304) for storing the calculated points.

"Points" mentioned above are symbols representing an electronically distributable asset or credit value. The points are also utilized to provide various services, benefits, free gifts, articles and the others. It is preferable that the points can be exchanged between the audience members. To this end, a point exchange section functional section for electrically giving and getting points may be provided.

In the receiving device in this embodiment for carrying out the invention, respective histories including a series of operations until data is output, data output time, a combination of data identifiers, the presence/absence of a predetermined input and the like are united together by the history storage section (3301) by the above audience and transmitted from the history information transmission section (3302) to a broadcast station.

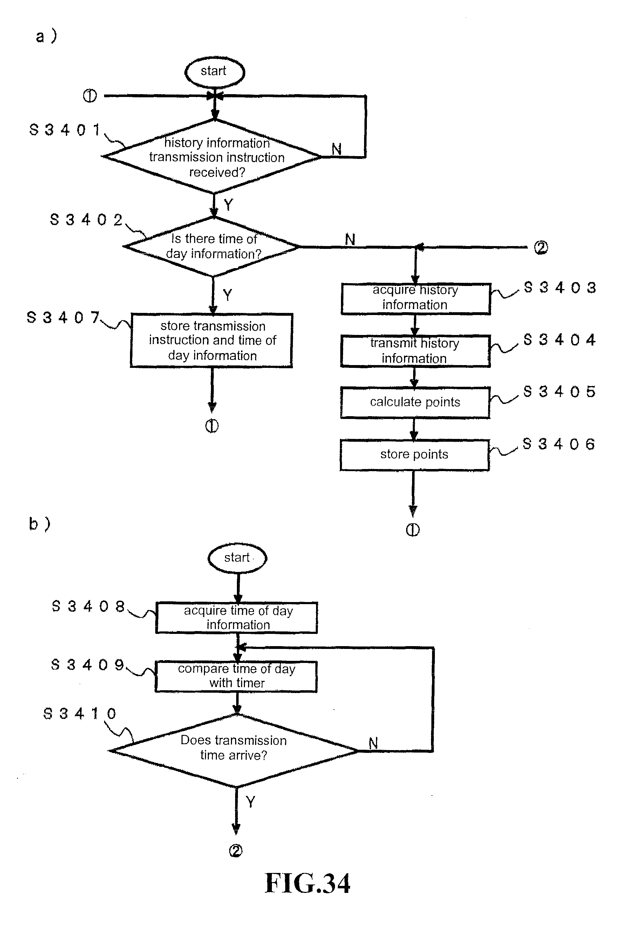

Next, a processing flow in the receiving device in this embodiment for carrying out the invention will be described. As shown in FIG. 34(a), first, it is detected whether or not a history information transmission instruction is received (in a step s3401). If the instruction is received, it is then determined whether or not the transmission instruction includes time information (in a step s3402). If the transmission instruction does not include time information, history information is instantly acquired (in a step s3403) and the acquired history information is transmitted (in a step s3404). Next, points corresponding to the transmitted operation history are calculated (in a step s3405) and the calculated points are stored (in a step s3406).

On the other hand, if the transmission instruction includes the time information, the time information is stored together with the transmission instruction (in a step s3407). As shown in FIG. 34(b), the time information is acquired (in a step s3408), the acquired time information is compared with the timer (in a step s3409) and it is detected whether or not transmission time arrives (in a step s3410). At the transmission time, the history information is acquired (in a step s3403) and the points are finally stored as in the case of the above (in a step s3406).

According to the receiving device in this embodiment for carrying out the invention, the stored operation history information is transmitted to the broadcast station to be used for various audience analyses, and the audience can gain points in exchange of the transmission of the operation history information of the audience. Due to this, a broadcast station, a program provider and the like can obtain individual operation history information from many audience.

(Sixteenth Embodiment for Carrying out the Invention) This embodiment for carrying out the invention is a portable receiving device (3600) shown in FIG. 36, which device includes a data receiving section (3601) receiving broadcast data, a data output section (3602) outputting the received data, a receiving location acquisition section (3603) acquiring a data receiving location, and a history storage section (3604) storing the location acquired by the receiving location acquisition section (3603) as a history.

The portable receiving device (3600) is a handy receiving device such as a portable television.

The receiving location acquisition section (3603) acquires a location at which data is received. The location is an overseas or domestic location (e.g., prefecture, city or village), an indoor or an outdoor location, or the like. Also, in this embodiment for carrying out the invention, the receiving location acquisition section (3603) automatically acquires a location by receiving a signal from a GPS (Global Positioning System) or from a radio frequency (RF) tag. It is noted that the present invention is not limited thereto and that an audience may input the receiving location of the audience for oneself.

In the receiving device (3600) in this embodiment for carrying out the invention, if an audience makes a train trip in a route of Fukuoka → Oita → Miyazaki → Nagasaki in the Kyushu district of Japan while carrying the receiving device (3600) in this embodiment, for example, these receiving locations are stored as histories in the history storage section (3604).

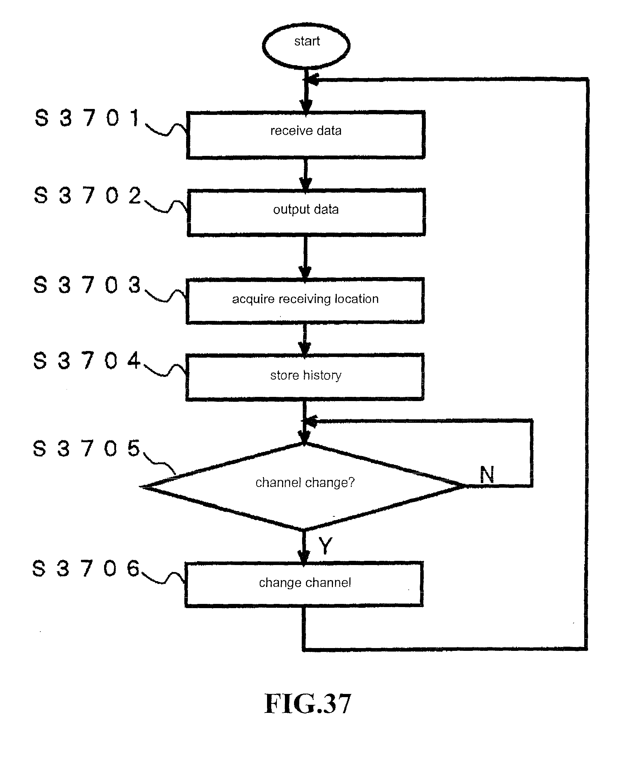

Next, a processing flow in the portable receiving device in this embodiment for carrying out the invention will be described. As shown in FIG. 37, broadcast data is received (in a step s3701) and the received data is output (in a step s3702). Thereafter, a receiving location is acquired (in a step s3703) and the acquired location is stored as a history (in a step s3704). Also, it is detected whether or not there is a channel change instruction (in a step s3705). If there is such an instruction, a channel is changed (in a step s3706). During this time, a receiving end instruction may be accepted. If there is such an instruction, receiving is finished.

According to the portable receiving device in this embodiment for carrying out the invention, if the receiving device is carried by an audience and the device receives broadcasting, receiving locations are consecutively stored as histories. It is, therefore, possible to examine the relationship between the behavior of the audience and data receiving.

Accordingly, it can be seen that the present invention provides a system wherein an individual audience side can store various operation histories such as a series of operations until data is output, data output time, data storage and a data receiving state and appropriately transmit the operation histories to a broadcast station side. Due to this, the broadcast station and a program provider can easily grasp the interests and needs of audience members from various information relating to the respective audience members.

## Claims

1. A receiving device, comprising:
a data receiving section receiving broadcast data;
a data output section outputting the data received by said receiving section; and
a history storage section storing a series of operations until said data is output.

2. A receiving device, comprising:
a data receiving section receiving broadcast data;
a timer;
a data output section outputting the data received by said receiving section;
a time count section counting time at which said data is output from the output section using said timer; and
a history storage section storing output time information including the time counted by said time count section.

3. A receiving device according to claim 1 or 2, further comprising:
a history information transmission section transmitting the information stored by said history storage section.

4. A history storage method for a receiving device, comprising the steps of:
receiving broadcast data;
outputting the received data; and
storing a series of operations until said data is output as a history.

5. A computer readable recording medium recording a program for history storage of a receiving device, the computer readable recording medium recording the program for executing the steps of:
receiving broadcast data;
outputting the received data; and
storing a series of operations until said data is output as a history.
